# FASCICULE DE BREVET EUROPEEN

(11) **EP 1 567 269 B1**
(45) Date de publication et mention de la délivrance du brevet: **03.01.2007**
(21) Numéro de dépôt: 03789521.6
(22) Date de dépôt: 27.11.2003
(51) Int. Cl.: B01L 3/00, G01N 27/26

(54) **DISPOSITIF MICROFLUIDIQUE DANS LEQUEL L'INTERFACE LIQUIDE/FLUIDE EST STABILISEE**
MIKROFLUIDES SYSTEM MIT STABILISIERTER FLÜSSIG-FLÜSSIG-GRENZFLÄCHE
MICROFLUIDIC DEVICE WITH STABILIZED LIQUID-FLUID INTERFACE

(30) Priorité: 04.12.2002 FR 0215254
(43) Date de publication de la demande: 31.08.2005
(73) Titulaire: COMMISSARIAT A L'ENERGIE ATOMIQUE, 75752 Paris (FR)
(72) Inventeur: SARRUT, Nicolas, F-38170 Seyssinet-Pariset (FR)
(74) Mandataire: Jouvray, Marie-Andrée
(86) Numéro de dépôt international: PCT/FR2003/003519
(87) Numéro de publication internationale: WO 2004/052542

(56) Documents cités:
- WO-A-00/60341
- WO-A-00/74850
- WO-A-02/069016
- US-A- 4 818 052
- US-A- 5 992 820
- US-A1- 2002 043 463
- US-B1- 6 337 740

## Description

### Domaine technique de l'invention

L'invention concerne un dispositif microfluidique comportant au moins un micro-canal destiné à contenir au moins un liquide et au moins un fluide non miscible avec le liquide et des moyens de stabilisation de l'interface entre le liquide et le fluide, ledit micro-canal étant délimité par des parois inférieure, latérales et supérieure.

### État de la technique

Les microlaboratoires ou dispositifs microfluidiques, plus connus sous les noms anglo-saxons de « µ-TAS» (micro Total Analysis System) ou de « Lab-on-a-chip », sont utilisés pour réaliser des opérations chimiques ou biologiques, sur des échantillons de très petits volumes. Ces volumes sont, par exemple, d'un ordre de grandeur compris entre le nanolitre et le microlitre. Il est ainsi connu d'utiliser des dispositifs microfluidiques pour réaliser des mélanges, des séparations, des contrôles de température, des réactions ou des extractions par solvant.

A cette échelle, une des difficultés principales générée par la mise en contact de deux phases non miscibles entre elles et, plus particulièrement, lors du transfert de masse entre les deux phases, dans le cas d'une extraction par solvant par exemple, est la stabilisation de l'interface entre les deux phases.

Il existe différentes méthodes de stabilisation d'interfaces liquide/liquide ou liquide/gaz. Ainsi, dans des dispositifs de plus grande échelle, il est connu de stabiliser l'interface entre deux phases non miscibles, grâce à une membrane poreuse. A titre d'exemple, le document WO-A-9612540 décrit un dispositif et un procédé permettant le transfert de solutés entre deux phases fluides non miscibles, à travers une membrane poreuse plane destinée à stabiliser l'interface entre les deux phases fluides.

Cette technique a été adaptée à l'échelle des microlaboratoires, comme le mentionne le document « Fabrication of components and systems for chemical and biological microreactors » de W. Ehrfeld and al. (Microreaction technology, IMRET1, 1997, pages 72-90). Ce document décrit l'utilisation de membranes très fines et sélectives, dans des microlaboratoires, pour réaliser des extractions et des filtrations.

Il est également connu de modifier les propriétés de surface d'un micro-canal dans lequel deux phases non miscibles entre elles sont introduites. Ainsi le document « Surface-directed liquid flow inside microchannels » de Bin Zhao et al. (Science , Vol 291, 2001, pages 1023-1026), décrit une méthode de stabilisation d'interface dans un micro-canal. Des zones prédéterminées du fond du micro-canal sont traitées chimiquement, de manière à modifier les propriétés de mouillabilité des zones, ce qui impose des chemins particuliers aux deux phases. Chaque phase reste, en effet, localisée sur la zone qui lui correspond le mieux d'un point de vue mouillabilité. Cette technique est, notamment, utilisée pour des applications où une grande surface de contact entre les deux phases est nécessaire mais elle est peu pratique à mettre en oeuvre.

Il est également courant d'appliquer, de manière ponctuelle, une différence de potentiel entre deux électrodes dans le but de déplacer un fluide d'un point donné à un autre. Ainsi, le document US-A-2002/0043463 décrit un dispositif destiné à faire passer une goutte d'électrolyte disposé dans un liquide non miscible, d'une chambre inférieure vers une chambre supérieure, par des orifices disposés dans une paroi séparant la chambre supérieure de la chambre inférieure. L'application ponctuelle d'une différence de potentiel entre un premier couple d'électrodes permet, dans un premier temps, le déplacement de la goutte le long de la chambre inférieure pour l'amener en face d'un orifice prédéterminé de la paroi. Puis, une différence de potentiel ponctuelle est appliquée entre un second couple d'électrodes disposées respectivement sous la chambre inférieure et sur la chambre supérieure de manière à permettre le passage de la goutte d'une chambre à l'autre à travers l'orifice de la paroi.

Les documents US4818052 et WO-A-02069016 décrivent des commutateurs optiques fonctionnant grâce au déplacement dans un micro-canal, d'un premier fluide par rapport à un second fluide non miscible avec le premier fluide, entre des première et seconde positions. Le déplacement du premier fluide peut être réalisé en appliquant, de manière ponctuelle, une différence de potentiel entre des électrodes disposées sur les parois opposées du micro-canal. Chaque électrode couvre une partie de la longueur du micro-canal, de manière à provoquer un déplacement longitudinal de la goutte à l'intérieur du micro-canal, par application d'une séquence de signaux de commande.

L'application d'une tension dans ce type de dispositif permet seulement de déplacer un fluide dans un autre fluide non miscible et d'un point donné vers un autre point donné.

### Objet de l'invention

L'invention a pour but un dispositif microfluidique dans lequel la zone de contact entre un liquide et un fluide, non miscibles entre eux, est stabilisée et est facile à mettre en oeuvre, tout en conservant une surface de contact élevée entre le liquide et le fluide.

Selon l'invention, ce but est atteint par le fait que les moyens de stabilisation comportent au moins une électrode disposée sur au moins une partie d'une première paroi du micro-canal, sur toute la longueur de celui-ci et au moins une contre-électrode disposée, sur toute la longueur du micro-canal, sur au moins une partie d'une seconde paroi, disposée en regard de l'électrode.

Selon un développement de l'invention, la contre-électrode est disposée sur la totalité de la seconde paroi.

Selon un mode de réalisation préférentiel, l'électrode et la contre-électrode sont respectivement disposées sur les parois inférieure et supérieure.

Selon une autre caractéristique de l'invention, le fluide ou le liquide étant conducteur d'électricité, le dispositif microfluidique comporte des moyens d'isolation disposés entre l'électrode ou la contre-électrode et ledit fluide ou ledit liquide.

Selon une autre caractéristique, le micro-canal comporte, à au moins une extrémité, deux micro-canaux d'extrémité, destinés à être parcourus respectivement par le fluide et le liquide.

### Description sommaire des dessins

D'autres avantages et caractéristiques ressortiront plus clairement de la description qui va suivre de modes particuliers de réalisation de l'invention donnés à titre d'exemples non limitatifs et représentés aux dessins annexés, dans lesquels :
La figure 1 est une représentation schématique, en coupe transversale, d'un dispositif microfluidique selon l'invention.
Les figures 2 et 3 représentent respectivement différents modes de réalisation d'un micro-canal d'un dispositif microfluidique selon l'invention.
Les figures 4 à 7 représentent schématiquement, en vue de dessus, différentes étapes d'introduction d'un liquide et d'un fluide dans un dispositif microfluidique selon l'invention.
Les figures 8 à 11 sont des représentations schématiques de différentes étapes de réalisation d'un dispositif microfluidique selon l'invention.

### Description de modes particuliers de réalisation.

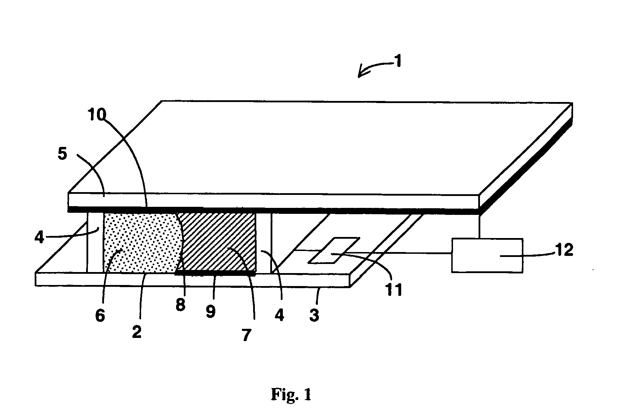

Sur la figure 1, un dispositif microfluidique 1, notamment utilisé pour réaliser des extractions par solvant, comporte au moins un micro-canal délimité par une paroi inférieure 2 formée par un substrat 3, des parois latérales 4 formées sur le substrat et une paroi supérieure 5 parallèle au substrat. Le micro-canal est destiné à mettre en contact un liquide et un fluide formant deux phases 6 et 7 non miscibles entre elles. Par fluide, on entend un liquide ou un gaz.

Le micro-canal est une structure tridimensionnelle creuse présentant une longueur très grande par rapport à la hauteur. Dans le cas, où la longueur est très grande par rapport à la largeur, on parlera d'un micro-canal de structure tridimensionnelle linéique. A titre d'exemple, la longueur d'un micro-canal est, de préférence, de l'ordre de quelques millimètres à quelques centimètres, tandis que la largeur et la hauteur sont respectivement de l'ordre de quelques dizaines à quelques centaines de micromètres. Le micro-canal peut également avoir une largeur très grande par rapport à sa hauteur, notamment lorsqu'il contient de nombreuses phases. On parlera alors d'un micro-canal de structure tridimensionnelle surfacique ou d'une micro-chambre.

Pour stabiliser l'interface entre deux phases, le dispositif microfluidique comporte au moins une électrode disposée sur au moins une partie d'une première paroi du micro-canal, sur toute la longueur de celui-ci. Au moins une contre-électrode est disposée, sur toute la longueur du micro-canal, sur au moins une partie d'une seconde paroi. La partie de la seconde paroi qui comporte la contre-électrode est disposée en regard de l'électrode. La contre-électrode peut, aussi, être disposée sur la totalité de la seconde paroi. La largeur de l'électrode et de la contre-électrode est, de préférence, de l'ordre de quelques dizaines à quelques centaines de micromètres.

Le dispositif microfluidique comporte, également, des moyens destinés à créer une différence de potentiel entre l'électrode et la contre-électrode. La différence de potentiel créé des forces dites électrostatiques qui modifient certaines propriétés de l'une des deux phases ou des deux phases, selon la sensibilité des phases vis-à-vis de ces forces. Ainsi, les forces peuvent être de différentes natures, selon les caractéristiques du liquide et du fluide mis en contact. Elles peuvent, par exemple, modifier les caractéristiques de mouillage d'une des phases ou des deux phases par rapport à leur support. Dans ce cas, les forces sont appelées des forces d'électromouillage ou d'électrocapillarité. Il peut également s'agir de forces de volume ou diélectriques agissant sur des liquides diélectriques.

La différence de potentiel créée permet de conserver la phase la plus sensible aux forces créées, dans une zone délimitée par l'électrode et la partie de la contre-électrode disposée en regard de l'électrode, ce qui stabilise l'interface entre les deux phases, celle-ci pouvant être verticale ou horizontale selon la disposition des électrodes. Ainsi, si l'électrode et la contre-électrode sont respectivement disposées sur la paroi inférieure et la paroi supérieure, l'interface est sensiblement verticale, tandis que si les électrodes sont disposées sur les parois latérales, l'interface est sensiblement horizontale.

Sur la figure 1, l'électrode 9 est disposée sur une partie de la paroi inférieure 2 et la contre-électrode 10 est disposée sur l'ensemble de la paroi supérieure 5. L'électrode 9 et la contre-électrode 10 sont, respectivement, en contact avec la phase 7 et les deux phases 6 et 7. L'électrode 9 et la partie de la contre-électrode 10 en regard de l'électrode 9 forment, alors, une première zone prédéterminée dans laquelle se trouve la phase 7, la phase 8 étant disposée dans une seconde zone du micro-canal disposée à côté de la première zone.

Le dispositif comporte, également, une reprise de contact électrique 11 qui connecte l'électrode 9 à un générateur de tension 12, également connecté à la contre-électrode 10. La tension appliquée par le générateur est soit alternative, soit continue et elle est de l'ordre de quelques dizaines à quelques centaines de Volts. Dans le cas d'une tension alternative, la fréquence électrique peut aller de l'ordre de quelques dizaines de Hertz à quelques dizaines de mégaHertz. Ainsi, la tension créée entre les deux électrodes est permanente, c'est-à-dire qu'elle n'est pas appliquée de manière ponctuelle mais au contraire pendant toute la durée d'utilisation du dispositif micro-fluidique, de sorte que pendant cette durée, l'interface entre les deux phases est stabilisée. La tension peut par exemple être sinusoïdale.

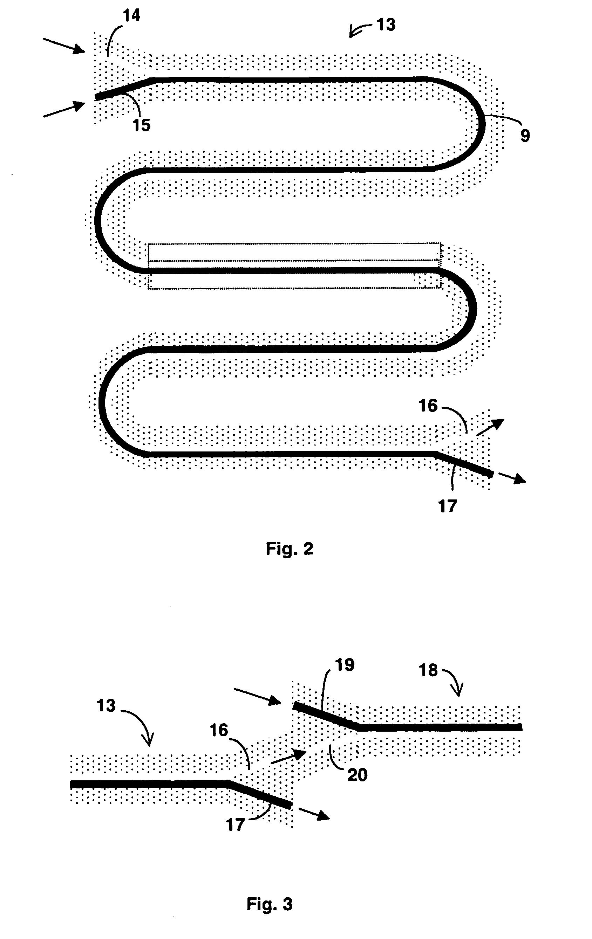

Les phases introduites dans le micro-canal, peuvent être immobiles ou en mouvement. Si les phases sont destinées à être en mouvement, le micro-canal peut comporter, à au moins une extrémité, deux micro-canaux d'extrémité, destinés à être parcourus respectivement par le fluide et le liquide. Ainsi, sur la figure 2, le liquide et le fluide sont destinés à circuler dans un micro-canal 13, respectivement dans des première et seconde zones longitudinales et adjacentes. La première zone est délimitée, à la figure 2, par l'électrode 9 tandis que la seconde zone correspond à la partie libre du micro-canal, c'est-à-dire la partie ne comportant pas d'électrode. Le micro-canal 13 comporte également des virages de manière à occuper moins de place qu'un micro-canal linéaire.

Les extrémités du micro-canal 13 comportent, respectivement, un micro-canal d'entrée 14 et un micro-canal de sortie 16, destinés respectivement à l'introduction et la sortie d'une première phase. De même, pour l'introduction et la sortie d'une seconde phase, les deux extrémités du micro-canal 13 comportent un micro-canal d'entrée 15 et un micro-canal de sortie 17. Les deux phases circulent, dans le micro-canal 13, sur des chemins délimités par l'électrode et la contre-électrode. Le chemin de la phase la plus sensible à la différence de potentiel créée entre l'électrode et la contre électrode est représenté par l'électrode 9 sur la figure 2. Celle-ci est disposée sur une partie de la largeur de la paroi inférieure du micro-canal 13, sur toute la longueur de celui-ci, ainsi que sur toute la longueur et la largeur des micro-canaux d'entrée et de sortie 15 et 17. Les deux phases peuvent circuler dans le même sens ou en sens contraire.

Selon des variantes de réalisation, le dispositif microfluidique peut comporter une pluralité de micro-canaux disposés en série ou en parallèle. Ainsi, sur la figure 3, le micro-canal 13 selon la figure 2 est relié à un second micro-canal 18 de même géométrie. Le second micro-canal 18 comporte un micro-canal d'entrée 19 destiné à introduire une troisième phase et un micro-canal d'entrée 20 pour l'introduction de la première phase. Le micro-canal d'entrée 20 est connecté au micro-canal de sortie 16, de manière à permettre le passage de la première phase, du premier micro-canal 13 au second micro-canal 18. Ceci permet de réaliser un second transfert de masse entre la première et la troisième phases, la seconde phase du premier micro-canal 13 étant évacuée par le micro-canal de sortie 17. La mise en série de plusieurs micro-canaux permet, ainsi, de réaliser plusieurs extractions successives, tandis que la mise en parallèle de plusieurs micro-canaux permet de réaliser simultanément plusieurs extractions.

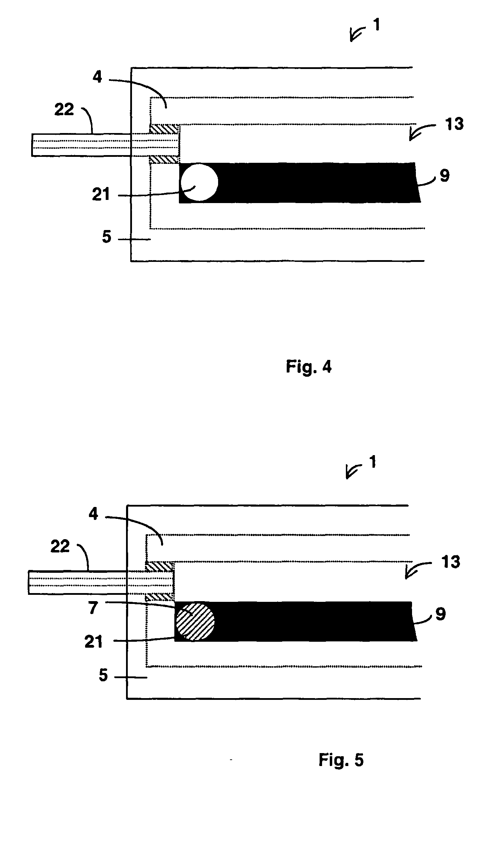

Les deux phases peuvent être injectées dans le dispositif microfluidique par tout type de moyen approprié. Ainsi, le liquide et le fluide peuvent être introduits grâce à une pompe, à une colonne d'eau ou à une pousse-seringue ou par capillarité ou électro-osmose. Ainsi, comme représenté sur les figures 4 à 7, le micro-canal 13 comporte un réservoir 21 destiné à recevoir la seconde phase 7. Un capillaire 22 est également connecté, par collage, à une des entrées du micro-canal 13, de manière à introduire la première phase.

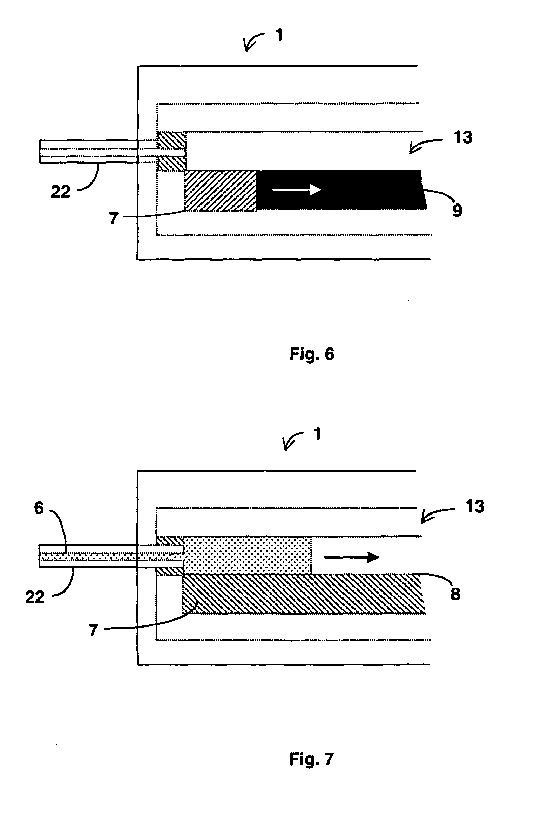

Sur la figure 5, un volume de la seconde phase 7 est déposé dans le réservoir 21. Sous l'action de la différence de potentiel appliquée entre la contre-électrode (non représentée) et l'électrode 9, la seconde phase 7, qui est la plus sensible à la différence de potentiel, s'étale dans la zone délimitée par l'électrode 9 et la partie de la contre-électrode en regard de l'électrode 9 (figure 6). Les forces créées par la différence de potentiel jouent également le rôle de pompe microfluidique, en entraînant la seconde phase 7 dans la zone du micro-canal 13 représenté par l'électrode 9 sur la figure 5. Une fois la seconde phase 7 injectée et stabilisée, la première phase 6 est injectée à travers le capillaire 22 (figure 7) et s'écoule dans le micro-canal 13, dans l'espace libre du micro-canal 13. L'interface 8 entre les première et seconde phases 6 et 7 reste stable au cours de cet écoulement.

Le dispositif microfluidique selon l'invention, permet, ainsi, de stabiliser efficacement l'interface entre deux phases non miscibles entre elles, sans nécessiter de barrière physique entre les deux phases. Ceci présente l'avantage de ne pas restreindre la surface de contact entre les deux phases et donc de ne pas limiter le transfert de masse entre les deux phases à une petite surface.

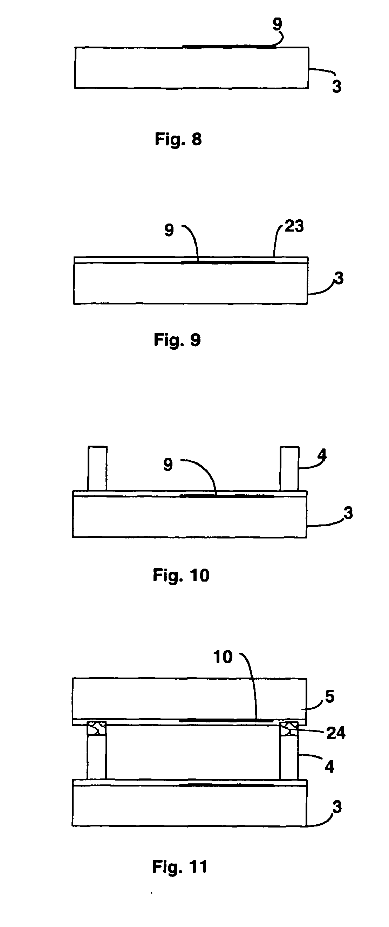

Selon un premier mode de réalisation, représenté sur les figures 8 à 11, le dispositif microfluidique selon la figure 1, est réalisé à partir d'un substrat 3, en verre ou en silicium de 500µm d'épaisseur, sur lequel est réalisée, par photolithographie, une électrode 9 en or (figure 8). Si le liquide ou le fluide sont conducteurs d'électricité, le dispositif microfluidique comporte des moyens d'isolation permettant de protéger l'électrode et/ou la contre-électrode du liquide et/ou du fluide conduteurs. Les moyens d'isolation sont disposés entre l'électrode ou la contre-électrode et le liquide ou le fluide. Le substrat 3 comportant l'électrode peut donc être isolé électriquement, par exemple, grâce à un couche 23 d'oxyde de silicium ou SiO₂ (figure 9), ladite couche étant déposée sur le substrat selon un procédé de dépôt en phase vapeur sous plasma, plus connu sous le nom de procédé « PECVD » (Plasma enhanced chemical vapor deposition).

Des parois latérales 4, en résine épaisse, sont ensuite réalisées sur le substrat 3, par photolithographie (figure 10). La paroi supérieure 5, en verre ou en matériau plastique tel que du polycarbonate par exemple, est assemblée par sérigraphie de colle 24 sur l'ensemble (figure 11). Avant cette étape, une partie de la largeur de la paroi supérieure 5 a été revêtue d'une couche d'un composé d'oxyde d'indium et d'étain, plus connu sous le nom anglo-saxon d'ITO (Indium Tin Oxyde). Ladite couche forme la contre-électrode 10 et est éventuellement isolée électriquement. La réalisation d'un tel dispositif microfluidique présente l'avantage d'être facile à mettre en oeuvre.

La couche isolante 23 de quelques micromètres peut être réalisée en un polymère isolant, tel qu'un dimère type Di Para Xylylène plus connu sous le nom commercial de Parylène ®, déposé en phase vapeur après la réalisation des parois latérales. La couche peut, également, être en polymère fluoré liquide, tel que le Téflon® liquide, déposé à la tournette avant l'assemblage par sérigraphie de colle. L'isolation de la contre-électrode 10 est, par exemple, réalisée sur la paroi supérieure, avant l'assemblage. Elle peut être réalisée grâce au dépôt d'une couche isolante de quelques micromètres en Parylène® ou en Téflon®, déposée selon les techniques déjà décrites pour l'isolation de l'électrode 9. L'isolation de l'électrode et de la contre-électrode peut également être réalisée après l'assemblage des parois inférieure et supérieure, en déposant une couche isolante de quelques micromètres en Parylène® (dépôt en phase vapeur) ou en Téflon® liquide (dépôt par circulation dans le micro-canal).

Selon un second mode de réalisation, le micro-canal est réalisé dans la paroi supérieure 5, par embossage à chaud. La paroi supérieure ainsi structurée est ensuite revêtue d'une couche d'ITO, pour réaliser la contre-électrode. L'assemblage de la paroi supérieure sur le substrat comportant l'électrode est alors réalisé par sérigraphie de colle. Si le fluide et/ou le liquide sont conducteurs d'électricité, l'isolation de l'électrode et de la contre-électrode est réalisée par une des techniques décrites dans le premier mode de réalisation.

L'invention n'est pas limitée aux modes de réalisation décrits ci-dessus. Ainsi, l'électrode et la contre-électrode peuvent être, respectivement, disposées sur les parois latérales du micro-canal.

L'électrode et la contre-électrode peuvent également être disposées, en regard l'une de l'autre, sur la totalité d'une première et d'une seconde parois. Le fluide et le liquide ne réagissant pas de la même manière à la différence de potentiel appliquée entre l'électrode et la contre-électrode, l'interface entre-le fluide et le liquide est alors stabilisée par l'application de la différence de potentiel.

De plus, le dispositif microfluidique peut contenir un nombre de phases supérieur à deux, chaque phase étant non miscible avec les phases voisines. Il est également possible de coupler cette technique avec des techniques déjà connues telles que l'utilisation d'une membrane poreuse ou le traitement chimique des parois du micro-canal.

## Revendications

1. Dispositif microfluidique comportant au moins un micro-canal (13) destiné à contenir au moins un liquide et au moins un fluide non miscible avec le liquide et des moyens de stabilisation de l'interface entre le liquide et le fluide, ledit micro-canal (13) étant délimité par des parois inférieure (2), latérales (4) et supérieure (5), dispositif microfluidique (1) **caractérisé en ce que** les moyens de stabilisation comportent au moins une électrode (9) disposée sur au moins une partie d'une première paroi du micro-canal (13), sur toute la longueur de celui-ci et au moins une contre-électrode (10) disposée, sur toute la longueur du micro-canal, sur au moins une partie d'une seconde paroi, disposée en regard de l'électrode.

2. Dispositif microfluidique selon la revendication 1, **caractérisé en ce que** la contre-électrode (10) est disposée sur la totalité de la seconde paroi.

3. Dispositif microfluidique selon l'une des revendications 1 et 2, **caractérisé en ce que** l'électrode (9) et la contre-électrode (10) sont respectivement disposées sur les parois inférieure (2) et supérieure (5).

4. Dispositif microfluidique selon l'une des revendications 1 et 2, **caractérisé en ce que** l'électrode (9) et la contre-électrode (10) sont respectivement disposées sur les parois latérales (4).

5. Dispositif microfluidique selon l'une quelconque des revendications 1 à 4, **caractérisé en ce que** le fluide ou le liquide étant conducteur d'électricité, le dispositif microfluidique (1) comporte des moyens d'isolation disposés entre l'électrode ou la contre-électrode et ledit fluide ou ledit liquide.

6. Dispositif microfluidique selon l'une quelconque des revendications 1 à 5, **caractérisé en ce que** le fluide circule, dans le micro-canal (13), dans un sens inverse à celui du liquide.

7. Dispositif microfluidique selon l'une quelconque des revendications 1 à 6, **caractérisé en ce que** le micro-canal (13) comporte, à au moins une extrémité, deux micro-canaux d'extrémité, destinés à être parcourus respectivement par le fluide et le liquide.

## Claims

1. Microfluidic device comprising at least one microchannel (13) designed to contain at least one liquid and at least one fluid non-miscible with the liquid and means for stabilizing the interface between the liquid and the fluid, said microchannel (13) being defined by a bottom wall (2), side walls (4) and a top wall (5), microfluidic device (1) **characterized in that** the means for stabilizing comprise at least one electrode (9) arranged on at least one part of a first wall of the microchannel (13), over the entire length thereof, and at least one counter-electrode (10) arranged over the entire length of the microchannel, on at least one part of a second wall, arranged facing the electrode.

2. Microfluidic device according to claim 1, **characterized in that** the counter-electrode (10) is arranged on the whole of the second wall.

3. Microfluidic device according to one of the claims 1 and 2, **characterized in that** the electrode (9) and counter-electrode (10) are respectively arranged on the bottom wall (2) and the top wall (5).

4. Microfluidic device according to one of the claims 1 and 2, **characterized in that** the electrode (9) and counter-electrode (10) are respectively arranged on the side walls (4).

5. Microfluidic device according to any one of the claims 1 to 4, **characterized in that** the fluid or liquid being electrically conducting, the microfluidic device (1) comprises insulating means arranged between the electrode or counter-electrode and said fluid or said liquid.

6. Microfluidic device according to any one of the claims 1 to 5, **characterized in that** the fluid flows in the microchannel (13) in an opposite direction to that of the liquid.

7. Microfluidic device according to any one of the claims 1 to 6, **characterized in that** the microchannel (13) comprises, at least at one end, two end microchannels designed for the fluid and the liquid to respectively flow therethrough.

## Patentansprüche

1. Mikrofluid-Vorrichtung, die mindestens einen Mikrokanal (13) umfasst, der dazu bestimmt ist, mindestens eine Flüssigkeit und mindestens ein Fluid zu enthalten, das nicht mit der Flüssigkeit mischbar ist, sowie Stabilisierungsvorrichtungen der Grenzfläche zwischen der Flüssigkeit und dem Fluid, welcher Mikrokanal (13) von einer unteren Wand (2), einer oberen Wand (5) und Seitenwänden (4) begrenzt wird, Mikrofluid-Vorrichtung (1), die **dadurch gekennzeichnet, dass** die Stabilisierungsmittel mindestens eine Elektrode (9) umfassen, die an mindestens einem Teil einer ersten Wand des Mikrokanals (13) über dessen ganze Länge angeordnet ist, und mindestens eine Gegenelektrode (10), die über die ganze Länge des Mikrokanals an mindestens einem Teil einer zweiten Wand angeordnet ist, der gegenüber der Elektrode angeordnet ist.

2. Mikrofluid-Vorrichtung nach Anspruch 1, **dadurch gekennzeichnet, dass** die Gegenelektrode (10) an der gesamten zweiten Wand vorgesehen ist.

3. Mikrofluid-Vorrichtung nach einem der Ansprüche 1 und 2, **dadurch gekennzeichnet, dass** die Elektrode (9) und die Gegenelektrode (10) jeweils an der unteren Wand (2) bzw. der oberen Wand (5) angeordnet sind.

4. Mikrofluid-Vorrichtung nach einem der Ansprüche 1 und 2, **dadurch gekennzeichnet, dass** die Elektrode (9) und die Gegenelektrode (10) jeweils an den Seitenwänden (4) angeordnet sind.

5. Mikrofluid-Vorrichtung nach einem der Ansprüche 1 bis 4, **dadurch gekennzeichnet, dass** die Mikrofluid-Vorrichtung (1) im Falle eines elektrisch leitenden Fluids oder einer elektrisch leitenden Flüssigkeit Isolierungsvorrichtungen umfasst, die zwischen der Elektrode oder der Gegenelektrode und dem Fluid oder der Flüssigkeit angeordnet sind.

6. Mikrofluid-Vorrichtung nach einem der Ansprüche 1 bis 5, **dadurch gekennzeichnet, dass** das Fluid in dem Mikrokanal (13) gegenströmig zur Flüssigkeit zirkuliert.

7. Mikrofluid-Vorrichtung nach einem der Ansprüche 1 bis 6, **dadurch gekennzeichnet, dass** der Mikrokanal (13) an zumindest einem Ende zwei End-Mikrokanäle umfasst, die dazu bestimmt sind, jeweils von dem Fluid bzw. der Flüssigkeit durchströmt zu werden.
